# EUROPEAN PATENT APPLICATION

(11) **EP 1 936 985 A2**
(43) Date of publication of application: **25.06.2008**
(21) Application number: 07024605.3
(22) Date of filing: 19.12.2007
(51) Int. Cl.: H04N 7/173

(54) **Technique for dynamically controlling delivery of content**

(30) Priority: 22.12.2006 US 615249
(71) Applicant: Nortel Networks Limited, St Laurent, Québec H4S 2A9 (CA)
(72) Inventor: Constantinof, Christian, Kanata ON K2M 1B4 (CA)
(74) Representative: Coyle, Philip Aidan

(57) **Abstract**

A technique for dynamically controlling delivery of content is disclosed. In one particular exemplary embodiment, the technique may be realized as a method for controlling the delivery of subscriber television content over a network. The method comprises the steps of: receiving at least one content receiver designation associated with a content receiver where content is to be displayed, wherein said content receiver is at a location other than a primary address associated with a subscriber; validating the content receiver designation; and delivering content over a network to the content receiver.

## Description

### FIELD OF THE INVENTION

The present invention relates generally to the transmission of content over a network and, more particularly, to a technique for dynamically controlling delivery content of content over a network.

### BACKGROUND OF THE INVENTION

Traditional cable television providers transmit content (e.g., programming or channels) to specific or predetermined destinations, such as a subscriber's home television set or other display device. More specifically, content is broadcast, delivered or transmitted by a content provider (e.g., cable provider) to content receivers (e.g., set top boxes) that process the signals and determine which channels the subscriber is authorized to receive.

Subscribers typically specify the content they want to receive, and where they want to receive it, at the time they subscribe to the cable provider's cable services. Many cable providers offer plans or packages, such as Gold, Silver and Platinum subscription plans, for example, that include select channels and programming. In addition, users or subscribers may order pay-per-view ("PPV") or video-on-demand ("VoD") programming for an additional fee throughout the subscription period.

While subscribers have some control over the content they receive, they have little to no control over where such content is broadcast, delivered or transmitted. Most cable providers broadcast, deliver or transmit content exclusively to the location specified when the subscriber first set up his or her account.

However, a subscriber may wish to dynamically receive content on his or her computer, the television set of a neighbor, or any other location not associated with the user's account. While systems have been developed that enable a user to dynamically designate where content is received, such systems require that the device receiving or displaying the content be connected to an IP network. Currently, no known system or method exists whereby a user is able to dynamically control the delivery of content over a traditional cable or satellite TV network.

In view of the foregoing, it would be desirable to provide a technique for dynamically controlling the delivery of content which overcomes the above-described inadequacies and shortcomings.

### SUMMARY OF THE INVENTION

The various techniques of the invention disclosed herein enable a subscriber of cable or satellite television programming to designate where programming is to be transmitted and displayed. In contrast to existing systems, the techniques of the invention enable the subscriber to dynamically designate where the programming is to be received and displayed. For example, a cable subscriber may decide to receive his or her programming at the vacation lake house for the weekend, rather than at his home. To do that, the subscriber provides his or cable provider with location information about where the cable content is to be received and displayed. The location information may consist of a cable receiver's (e.g., set top box) serial number or other identifier that uniquely identifies the set top box. The subscriber may provide the location information to the cable provider via a web page, telephone, or other method of communication.

Once the cable provider receives the location information (e.g., set top box serial number), it proceeds to authenticate the set top box or other receiver associated with the location information. Authentication may comprise ensuring that the subscriber is at the location of the designated set top box. This way, the cable provider may be sure that the programming will be delivered to correct set top box. For example, the cable provider may transmit a unique identifier to be displayed at a television associated with the designated set top box. The subscriber would then verify the unique identifier displayed to the cable provider, such as by providing the reading off the unique identifier to the an agent of the cable provider over the telephone, by inputting via a web site of the cable provider, via electronic mail, or other form of communication.

Once the set top box is authenticated, the service provider then identifies a user or channel profile that specifies which channels or programming the subscriber is authorized to receive. The user or channel profile is then transmitted over a cable or satellite network, for example, to the designated set top box, where it will be installed and operate to filter incoming broadcast signals and thereby display appropriate programming.

As described herein, various systems and methods of the invention comprise a collection of modules that carry out or perform the specific features and functionality of the claimed invention. The modules enable interaction and communication between subscribers and cable and satellite providers, for example, as well as the transmission of user or channel profiles and content over cable and satellite network for display at the designated locations.

A technique for dynamically controlling delivery of content is disclosed. In one particular exemplary embodiment, the technique may be realized as a method for controlling the delivery of subscriber television content over a network. The method comprises the steps of: receiving at least one content receiver designation associated with a content receiver where content is to be displayed, wherein said content receiver is at a location other than a primary address associated with a subscriber; validating the content receiver designation; and delivering content over a network to the content receiver.

In accordance with other aspects of this particular exemplary embodiment, a method for controlling the delivery of subscriber television content is provided. The method comprising the steps of: receiving from a user, location information other than a primary location associated with a subscriber; and delivering subscriber content over a network to a content receiver associated with the location information.

In accordance with further aspects of this particular exemplary embodiment, a method for controlling the delivery of subscriber television content over a network is provided. The method comprising the steps of: sending at least one content receiver designation associated with a content receiver where content is to be displayed, wherein said content receiver is at a location other than a primary address associated with a subscriber; and receiving, in response to a validation of the content receiver designation, content over a network at the content receiver.

In accordance with further aspects of this particular exemplary embodiment, a content receiver for controlling the delivery of subscriber television content over a network is provided. The content receiver comprising: a transmitter for sending at least one content receiver designation associated with the content receiver where content is to be displayed, wherein said content receiver is at a location other than a primary address associated with a subscriber; and a receiver, for receiving television content in response to a validation of the content receiver designation.

The present invention will now be described in more detail with reference to exemplary embodiments thereof as shown in the accompanying drawings. While the present invention is described below with reference to exemplary embodiments, it should be understood that the present invention is not limited thereto. Those of ordinary skill in the art having access to the teachings herein will recognize additional implementations, modifications, and embodiments, as well as other fields of use, which are within the scope of the present invention as described herein, and with respect to which the present invention may be of significant utility.

### BRIEF DESCRIPTION OF THE DRAWINGS

In order to facilitate a fuller understanding of the present invention, reference is now made to the accompanying drawings, in which like elements are referenced with like numerals. These drawings should not be construed as limiting the present invention, but are intended to be exemplary only.
Figure 1 shows a system 100 in accordance with an embodiment of the present invention.
Figure 2 shows various exemplary modules that may be associated with content provider 105 or system 100 of Figure 1 in accordance with an embodiment of the present invention.
Figure 2A shows various exemplary modules that may be associated with content provider 105 or system 100 of Figure 1 in accordance with an embodiment of the present invention.
Figure 3 shows a system 300 in accordance with an embodiment of the present invention.
Figure 4 shows a method 400 in accordance with an embodiment of the present invention.
Figure 5 shows a method 500 in accordance with an embodiment of the present invention.
Figure 6 shows a method 600 in accordance with an embodiment of the present invention.

### DETAILED DESCRIPTION OF PREFERRED AND EXEMPLARY EMBODIMENTS

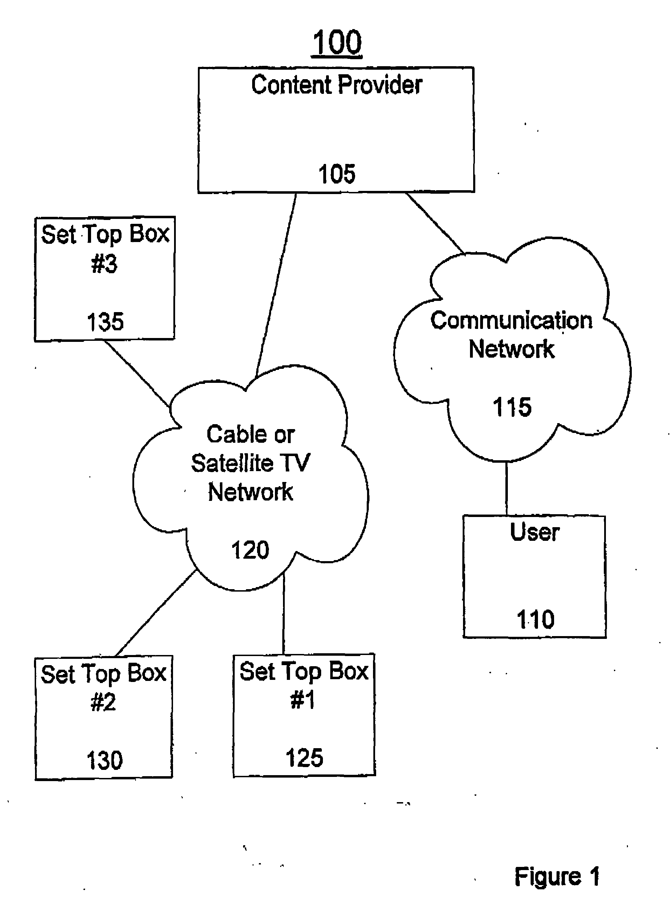

Referring to Figure 1, there is shown a system 100 for dynamically controlling the delivery of content in accordance with the present invention. As shown, system 100 comprises a content provider 105 which may be, for example, any provider or source of television content that gets delivered over network, such as a cable or satellite network 120, to a particular location, e.g., subscriber set top boxes 125, 130 and 135.

User 110 represents a subscriber of content provider 105. Typically, user 110 receives content from content provider 105 for display on a television, monitor or other viewing device. Content may comprise television programming received from content provider 105 as part of a subscription or additional PPV or VoD programming. Content may also comprise a user, or channel profile associated with the subscription that is maintained by content provider 105 and that specifies particular channels or programming a user is authorized to receive. The profile may be downloaded to the set top box, or boxes associated with a user to enable reception and display of the authorized channels on the user's television set(s). For example, the user profile may consist of Digital Rights objects that enable the decoding of encrypted content to permit display on the viewing device.

Communications network 115 comprises any communications network that enables interaction or communication between user 110 and content provider 105. For example, communications network 115 may be a circuit switched, network such as the Public Switched Telephone Network (PSTN), a packet switched network, a packet data network such as the internet, or a combination thereof. In some embodiments, the PSTN or other telephone communications network is used to transmit data relating to particular television or VOD content. In another embodiment, communication network 115 may comprise a Private Branch Exchange (PBX), which may further connect to the PSTN. communications network 115 may also comprise or enable SIP sessions between user 110 and content provider 105.

Television network 120 comprises any type of communication network capable of transmitting television content or programming and information related thereto. In one embodiment, communication network 120 comprises a cable or satellite communications network, such as a direct broadcast communication system (DBS), well known in the art, having a requisite number of dishes, satellites and transmitters/receivers (e.g., set top) boxes, for example.

Set top boxes 125, 130 and 135 comprise receivers or devices that receive, process and display, via an associated television set or other display device, content and programming received from content provider 105. In some embodiments, set top boxes 125, 130 and 135 maintain user or channel profiles that specify which channels or programming the corresponding user or subscriber is authorized to receive. Usually, the user or channel profile is determined at the time the user subscribes to content provider's services and comprises data or information that is used by the set top box to filter or receive signals corresponding to authorized channels or programming. In some embodiments, a user profile may permanently reside in a set top box, while in some embodiments it may be downloaded onto a particular set top box by content provider 105 , In Figure 1, set top box 125 may be located at user 110's residence. Set top box 130 may be located at user 110's lake house and set top box 135 may be located at a hotel room where the user may be staying, for example. Other arrangements and locations are possible. In some embodiments, each set top box has a unique identifier that is visible to the user and which may be used to inform content provider 105 the location where content or programming should be delivered, transmitted or broadcasted.

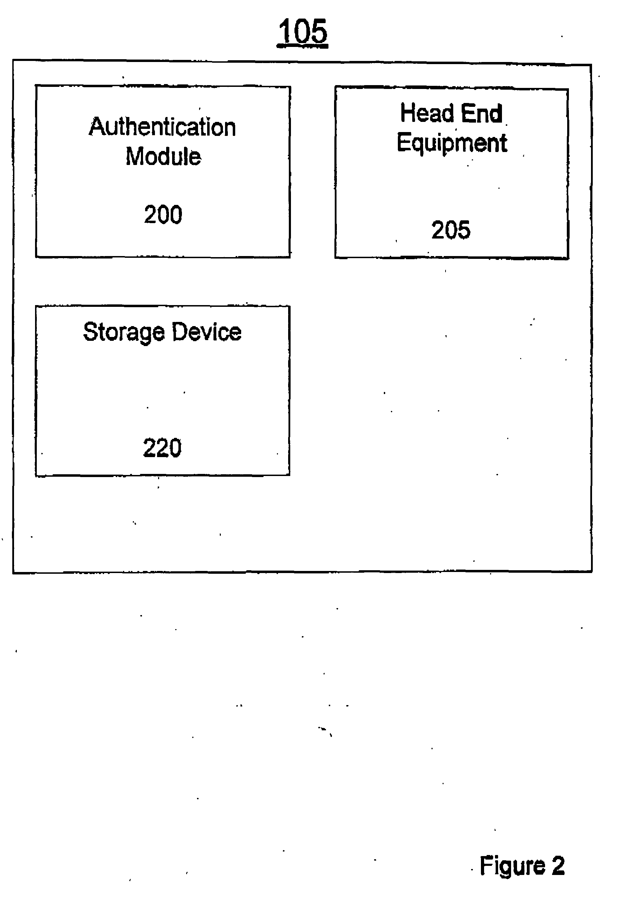

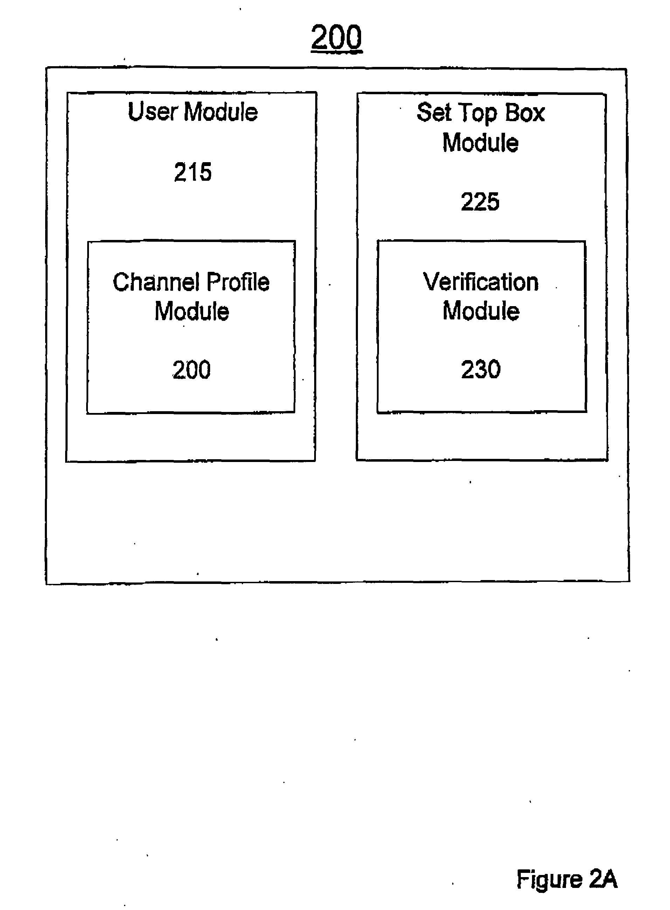

Figure 2 shows various exemplary modules which may be associated with content provider 105 in accordance with an embodiment of the invention. Content provider 105 may comprise an authentication module 200, head end equipment 205 and storage device 220. Alternatively, the user authentication and location module may belong to a third party service provider that performs the authentication and location identification functions on behalf of the content provider.

Authentication module 200 enables user 110 to select which location(s) (e.g., set top box) they would like to use to view programming. For example, referring to back to Figure 1, user 110 may decide to view programming at his residence, lake house, or the hotel room they are staying at Authentication module 200 comprises or is otherwise associated with one or more servers or engines. Authentication module 200 may comprise or host one or more applications or modules that function to permit interaction between agents of control center 105 and user 110 as it relates to dynamically controlling delivery of content, for example. Authentication module 200 enables content provider 105 to permit users or subscribers to dynamically control the transmission of content. Exemplary modules are set forth in Figure 2A.

Authentication module 200 may include, for instance, a workstation or workstations running on an operating system such as, for example, Microsoft Windows^{™} XP^{™}.

Storage device 210 comprises any component, element or device for storing data or information used, generated or processed by the various systems and methods disclosed herein. Such data or information may comprise, for example; (1) user or subscriber information such as the subscriber's name, address, and data or information about the user's programming or channel preferences; (2) set top box information such as the various unique identifiers associated with a particular set top box that are part of the content provider 105's cable system; and (3) any other data or information used by the various systems and methods described herein to carry out the features and functionality described herein.

Storage device 210 may comprise one or more databases, or database interfaces. An example of such a database is an Oracle" relational database such as that sold commercially by Oracle Corporation. Other databases or similar data storage devices, query format platform or resource or file storage system may also be used.

Figure 2A shows various exemplary modules that can be associated with authentication 200 in accordance with the invention. For example, authentication 200 may comprise a user or subscriber module 215, which further includes, is associated with, or comprises a user profile module 220 and a set top box module 225. Set top box module 225 further includes, is associated with, or comprises a verification module 230.

Subscriber module 215 enables content provider 105 to manage and administer information about subscribers. For example, subscriber module 215 may be used to maintain subscribers' names, addresses, billing information, associated channel profiles and any other data or information used by content provider 105 to carry out the various features and functionality described herein.

Channel profile module 220 enables content provider 105 to manage and administer information about its subscribers by monitoring and updating and revising channel profiles associated with particular users. For example, a user may decide to view certain channels or programming at particular locations. When at home, a subscriber may want to receive all available channels and programming, while opt for a more limited selection for their lake house, for example. In some embodiments, channel profile module 220 permits a subscriber, or an administrator of content provider 105, to make such selections or designations.

Set top box module 225 enables content provider 105 to manage and administer information about particular set top boxes associated with a particular user. For example, set top box module 225 may be used to maintain and administer set top box unique identifiers, locations, associated users or subscribers, and any other data or information used by content provider 105 to carry out the various features and functionality described herein.

Verification module 230 verifies that a set top box, for example, selected by a user to receive content from content provider 105 is authorized to receive such content. Verification may comprises verifying or otherwise confirming that the user is at the location of the designated set top box or other content receiving device. For example, verification module 230 can generate an identifier (e.g., a random alphanumeric identifier, symbol, or any sequence or combination thereof, a password, challenge question, or other informational prompt) which it then transmits over the cable or satellite network, for display on a television or other display device associated with a set top box designated or selected by the user to receive content. Upon display of the identifier, verification module 230 solicits an input from the user. The input may be provided by the user via a web page (e.g., Internet), by calling a predetermined telephone number, or by establishing an SIP session with the content provider, for example. Other techniques are possible and will be readily understood by those skilled in the art. Upon receiving the user input, verification module compares the input to the identifier sent. If there is a corresponding match or authentication, then the set top box may be authorized to receive or decode content. If there is no match, or if the user or subscriber fails to provide an input, verification module 230 may notify the user or subscriber (e.g., via a web page, email, or by calling the subscriber) that the set top box has not been verified.

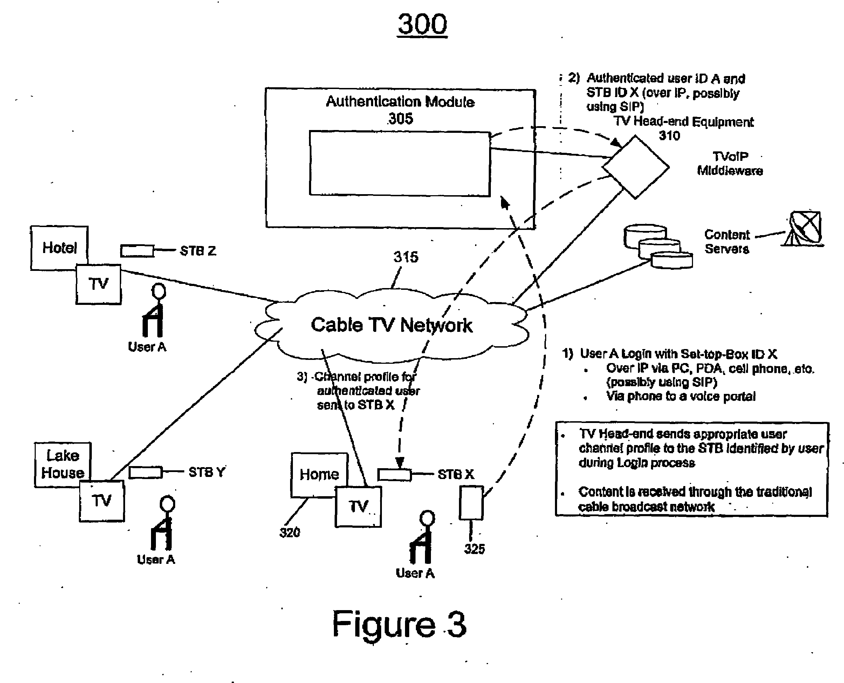

Figure 3 shows a system 300 for dynamically controlling the delivery of content in accordance with an embodiment of the present invention, and a method performed thereby. As shown, user A may control where their television content is received and displayed, e.g., at home 320, at the lake house 330, or hotel 335. Each of these locations is associated with set top box X, Y, or Z, respectively. In some embodiments, as shown in step 1), user A informs the content provider, via an authentication module 305, that they would like to receive television content at home 320 via set top box X. User A may make such designation via device 325, which comprises a telephone, computer, or any other communication device that enables the user to communicate authentication module 305, for example. In some embodiments, user A may designate a set top box by providing authentication module 305 with a unique identifier associated with the set top box, such as the set top box's serial number or other like identifier, for example. User A may also provide the set top box designation by interacting with an electronic system (e.g., automated call center or web page), or by interacting with a live agent.

Once the user designation of a set top box is received, authentication module 305 authenticates and verifies the designated set top box (e.g., set top box X), as shown in step 2). Authentication and verification may occur over a communications network, such as communications network 115 of Figure 1, for example. Authenticating or verifying the designated set top box may also comprise verifying that the user is at the same location as the designated set top box, as set forth above.

In some embodiments, once the location (e.g., designated set top box) is authenticated and verified, authentication module 305 identifies a user or channel profile associated with user A that determines which channels or programming the user is authorized to receive. Determining the channel profile may comprise accessing a channel profile that is associated with the user's account or subscription. Once the user's channel profile is determined, authentication identification module 305 transmits the appropriate user or channel profile to the designated set top box. The channel profile may reside on the designated set top box permanently, or for a specified period of time, as determined by the user content provider which is implemented by authentication module.

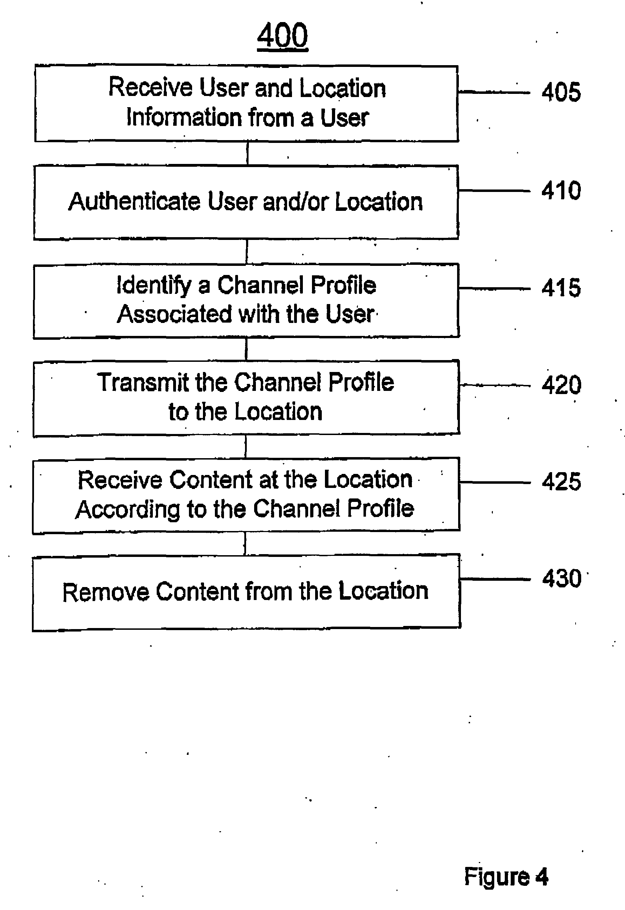

Figure 4 shows a method 400 for permitting a subscriber to dynamically control delivery or transmission of content, such as television content. The method is performed by content provider 105 of Figure 1, and more specifically the various modules set forth in Figures 2 and 2A, for example. At step 405, user and location information is received from a user. Such user and location comprises an identity of the user and/or an identity of a particular receiver (e.g., set top box) that is to receive content for display on an associated display device, e.g., a television. User and location information is received, for example via a communications network such as communications network 115 of Figure 1. At step 410, the user' s identity and/or location information is authenticated and verified. Authenticating the user may comprise requiring the user to provide a password to verify access rights. Verifying the location of the set top box comprises verifying that the user is at the location of the designated set top box, as described herein.

At step 415, once the user and location have been authenticated and verified, at least one user or channel profile associated with the user is be identified. For example, the user's channel profile specifies which programming or channels the user is authorized to receive. At step 420, the identified user or channel profile is transmitted to the receiver at the verified location, e.g. the set top box). The user or channel profile may be transmitted to the location via a cable, satellite, or any other network.

At step 425, content is received at the location and filtered and displayed according to the channel profile. In step 430, the user or channel profile may be removed from the location after some period of time. This period of time may be determined by the user at the time the location designation is provided, or by content provider 105. The predetermined period of time may also be a default period of time.

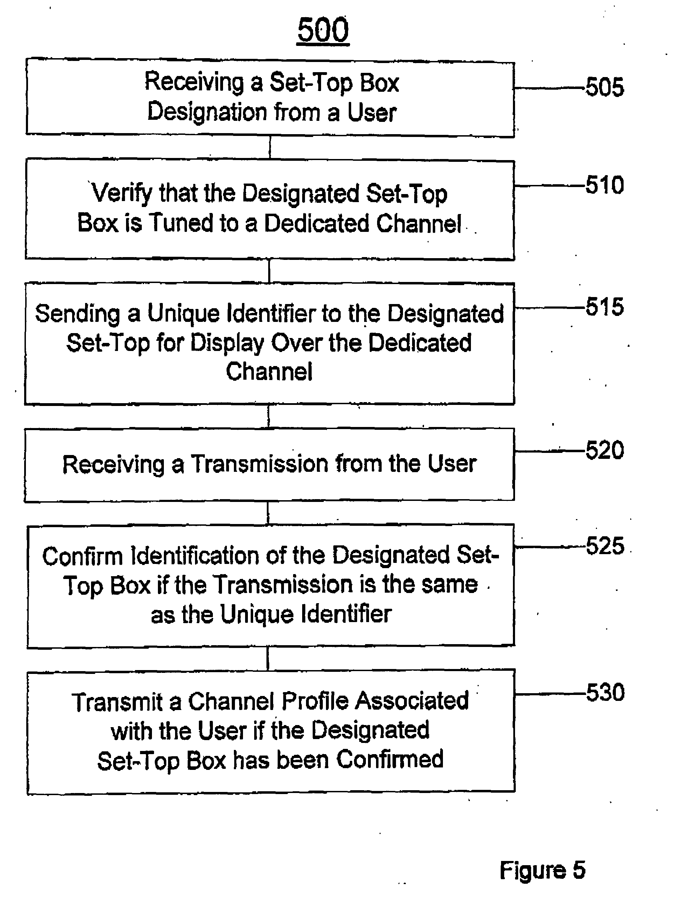

Figure 5 shows a method 500 for permitting a user or subscriber to dynamically control delivery or transmission of content. At step 505, a set top box designation is received from a user over a communications network. At step 510, content provider, for example, verifies that the designated set top box is tuned to a dedicated channel. For example, the user may be told to tune to a specified channel at the time the user provides the set top box designation.

At step 515, content provider sends, transmits or otherwise delivers a unique identifier to the designated set top box for display to the user over the dedicated channel. The unique identifier may comprise, for example, at least one randomly generated alphanumeric character or symbol, or any sequence or combination thereof. The content provider then requests that the user provide the alphanumeric characters or symbols being displayed over the dedicated channel. For example, if the content provider generates the identifier "12345ABC," the user may be asked to recite whatever identifier appears on the display. At step 520, the user transmits an input to the content provider. The user may provide the input over a communications network, such as communication network 115 in Figure 1, for example. If the input provided by the user is the same as that generated by the content provider, the set top box is verified; that is, because the user is able to view the random identifier at the location of the set top box, content provider can be assured that content will be transmitted to the appropriate location. Thus, at step 525 the content provider confirms to the user verification of the set top box. At step 530, content provider transmits a user or channel profile to the set top box so that the user may start receiving content.

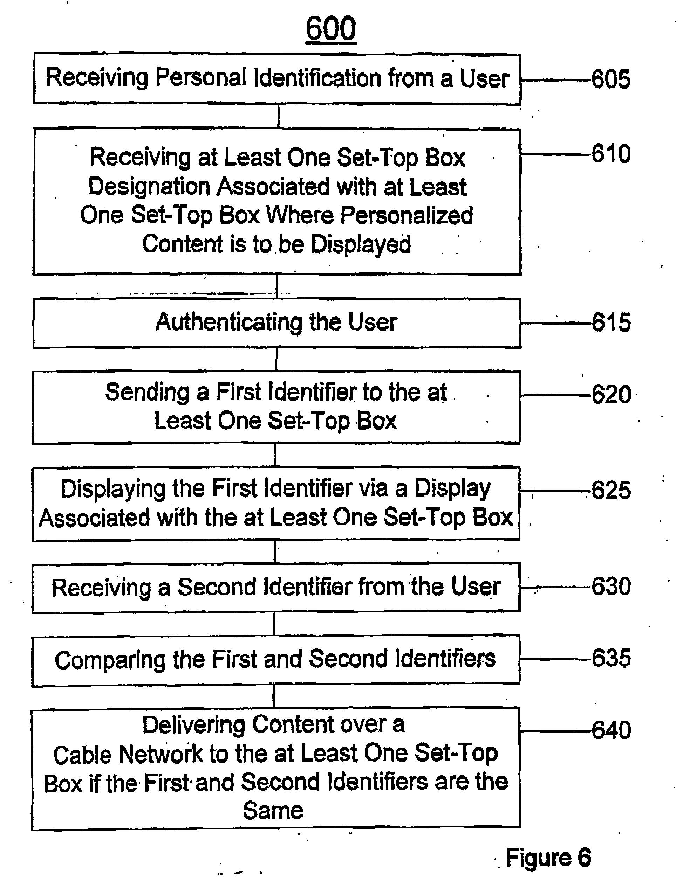

Figure 6 shows a method 600 for permitting a user or subscriber to dynamically control delivery or transmission of content, such as television content, for example. At step 605, a content provider receives a personal identification from a user. At step 610, the content provider receives at least one content receiver designation associated with at least one content receiver where personalized content is to be displayed. At step 615, content provider authenticates the user. At step 620, the content provider generates and sends to the content receiver associated with the content provider designation a first identifier. At step 625, the first identifier is displayed on a display associated with the content receiver. At step 630, the content provider receives a second identifier from the user. At step 635, the content provider compares the first and second identifiers. At step 640, the content provider delivers content over a network, e.g., cable TV network 120 in Figure 1, to the at least one content receiver if there is a corresponding match between the first and second identifiers.

At this point it should be noted that the techniques for dynamically controlling the delivery of content in accordance with the present invention as described above typically involves the processing of input data and the generation of output data to some extent. This input data processing and output data generation may be implemented in hardware or software. For example, specific electronic components may be employed in a content provider or similar or related circuitry for implementing the functions associated with the techniques for dynamically controlling the delivery of content in accordance with the present invention as described above. Alternatively, one or more processors operating in accordance with stored instructions may implement the functions associated with the techniques for dynamically controlling the delivery of content in accordance with the present invention as described above. If such is the case, it is within the scope of the present invention that such instructions may be stored on one or more processor readable carriers (e.g., a magnetic disk), or transmitted to one or more processors via one or more signals.

The present invention is not to be limited in scope by the specific embodiments described herein. Indeed, other various embodiments of and modifications to the present invention, in addition to those described herein, will be apparent to those of ordinary skill in the art from the foregoing description and accompanying drawings. Thus, such other embodiments and modifications are intended to fall within the scope of the present invention. Further, although the present invention has been described herein in the context of a particular implementation in a particular environment for a particular purpose, those of ordinary skill in the art will recognize that its usefulness is not limited thereto and that the present invention may be beneficially implemented in any number of environments for any number of purposes. Accordingly, the claims set forth below should be construed in view of the full breadth and spirit of the present invention as described herein.

## Claims

1. A method for controlling the delivery of subscriber television content over a network, comprising the steps of:
receiving at least one content receiver designation associated with a content receiver where content is to be displayed, wherein said content receiver is at a location other than a primary address associated with a subscriber;
validating the content receiver designation; and
delivering content over a network to the content receiver.

2. The method of claim 1 wherein validating the at least one content receiver designation comprises:
sending a first identifier to the content receiver, the content receiver displaying the first identifier via a display;
receiving a second identifier from the subscriber; and
comparing the first and second identifiers.

3. The method of claim 1 wherein the subscriber content comprises a channel profile associated with the subscriber.

4. The method of claim 3 wherein the channel profile designates at least one channel to be displayed via the display.

5. The method of claim 3 wherein the channel profile is stored on the content receiver.

6. The method of claim 1 wherein the content receiver comprises a set top box.

7. The method of claim 6 wherein the set top box comprises at least one addressable set top box having a unique, user-visible identification code.

8. The method of claim 6 wherein the set top box comprises at least one programmable set top box.

9. The method of claim 2 wherein the first identifier comprises at least one randomly generated alphanumeric character or symbol.

10. The method of claim 1 wherein the content receiver must be tuned to a designated channel for displaying said first identifier.

11. The method of claim 1 further comprising the step of authenticating the subscriber by verifying the user is authorized to control the delivery of content over a network.

12. The method of claim 1 wherein the at least one content receiver designation is provided by the subscriber over one of a web page, a designated telephone number, a text message, or electronic mail.

13. A method for controlling the delivery of subscriber television content, comprising the steps of;
receiving from a user, location information other than a primary location associated with a subscriber; and
delivering subscriber content over a network to a content receiver associated with the location information.

14. The method of claim 13 further comprising the step of authenticating the location information before the content is delivered over the network.

15. The method of claim 14 where authenticating the location information comprises verifying that the user is at the location.

16. The method of claim 13 wherein the location information comprises an identifier associated with a set top box.

17. The method of claim 13 wherein the content comprises a channel profile associated with the user.

18. A method for controlling the delivery of subscriber television content over a network, comprising the steps of:
sending at least one content receiver designation associated with a content receiver where content is to be displayed, wherein said content receiver is at a location other than a primary address associated with a subscriber; and
receiving, in response to a validation of the content receiver designation, content over a network at the content receiver.

19. A content receiver for controlling the delivery of subscriber television content over a network, comprising:
a transmitter for sending at least one content receiver designation associated with the content receiver where content is to be displayed, wherein said content receiver is at a location other than a primary address associated with a subscriber; and
a receiver, for receiving television content in response to a validation of the content receiver designation.
